# EUROPEAN PATENT SPECIFICATION

(11) **EP 0 554 839 B1**
(45) Date of publication and mention of the grant of the patent: **30.08.1995**
(21) Application number: 93101589.5
(22) Date of filing: 02.02.1993
(51) Int. Cl.: E05C 17/32, B60J 1/14

(54) **A device for operating side windows of motor vehicles**
Einrichtung zum Bedienen der Seitenfenster von Motorfahrzeugen
Dispositif pour manipuler les fenêtres latérales de véhicules automobiles

(30) Priority: 07.02.1992 IT TO920029 U
(43) Date of publication of application: 11.08.1993
(73) Proprietor: FIAT AUTO S.p.A., 10135 Torino (IT)
(72) Inventor: Goria, Aldo, I-10040 Piobesi Torinese (Torino) (IT)
(74) Representative: Marchitelli, Mauro

(56) References cited:
- EP-A- 0 423 441
- DE-A- 2 800 985
- DE-B- 2 210 353
- US-A- 4 289 349

## Description

The present invention relates to devices for operating and locking a pivotable rear window of a motor vehicle, comprising:
- a connecting member for fixing to the window,
- a lever-like operating handle, one end of which is articulated to the member for connection to the window,
- a support member which is intended to be fixed to the structure of the vehicle and has a support appendage, and
- a positioning and connecting rod the two ends of which are articulated about respective parallel axes to the support appendage and to the operating handle in a central position of said handle.

A device of the type indicated above is commonly used in vehicles currently on the market and, for example, enables limited opening of the rear window in order to ventilate the passenger compartment when the vehicle is in motion. Devices of the known type referred to also enable the window to be locked in the closed position by the reaching and subsequent passing of a dead-point position of the lever-connecting rod system, the position being maintained by the resilient reaction of the weatherstrip of the window. The window cannot therefore be opened from outside the vehicle but only from the passenger compartment by the operation of the lever-like operating handle.

A disadvantage of these known devices is that, when the window is open, the air pressure acting on the window when the vehicle is travelling faster than a certain speed causes its unwanted closure. Another problem with these known devices is that the dead-point which determines the closure and the locking of the window is absolutely dependent on the mounting of the device on the structure of the car and on its fixing to the window; a change in these positions, for example, due to faulty mounting or to the fixing holes for the support being positioned outside the tolerances, leads to the incorrect closure of the window. Moreover, wear of the weatherstrip may result in the closure force on the window being insufficient or even completely lacking.

The object of the present invention is to prevent the aforementioned problems and, in particular, to provide a device for operating and locking pivotable rear windows of motor vehicles,which has means which can be produced easily and cheaply for stopping the window and locking it in its open and closed positions.

In order to achieve this object, the subject of the invention is an operating and locking device of the type indicated above, characterised in that the operating handle has two seats for the selective snap-engagement of the end of the support appendage connected to the positioning and connecting rod in the closed and open positions of the window, respectively.

The present invention overcomes the problems of the prior art and provides an operating and locking device which keeps a rear window of a motor vehicle open, even when air pressure is acting on it because of the motion of the vehicle. Moreover, the device according to the invention enables the rear window to be locked shut regardless of whether the device is mounted outside the tolerances or if the weatherstrip of the window is worn.

Another advantage of the device according to the invention is that it indicates by a snap that a pivotable rear window of a motor vehicle has been opened or closed.

Further characteristics and advantages of the invention will become clear from the description which follows, with reference to the appended drawings, provided purely by way of non-limiting example, in which:

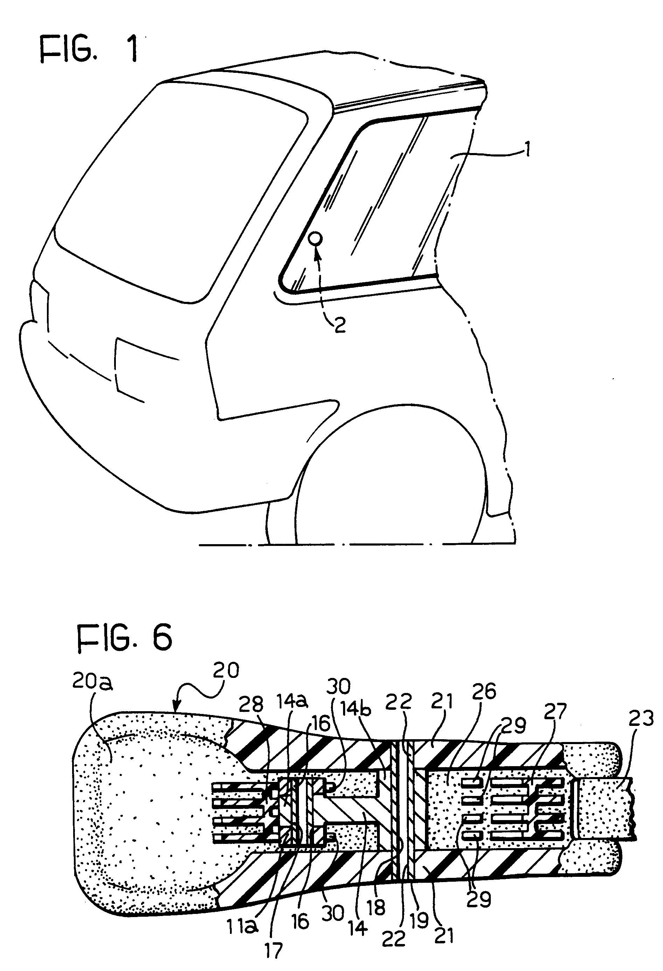

Figure 1 is an external, schematic view of the rear portion of a motor vehicle with pivotable rear windows,
Figure 2 is a view of the device according to the invention in the position in which the window is closed,
Figure 3 is a view similar to Figure 2 in the position in which the window is open,
Figure 4 is a section taken on the line IV-IV of Figure 2,
Figure 5 is a section taken on the line V-V of Figure 3,
Figure 6 is a section taken on the line VI-VI of Figure 5,
Figure 7 is a view taken in the direction indicated VII in Figure 4, on an enlarged scale.

With reference to the drawings, a pivotable rear window of a motor vehicle, indicated 1, is operated by an operating and locking device 2 which includes a substantially flat support plate 3 which is intended to be connected to the structure 5 of the car by fixing screws 4 extending through holes 6 in the support plate 3. Spacer bushes 7 formed integrally with the plate 3 in correspondence with the holes 6 keep the operating device 2 spaced a certain distance from the structure 5 so that the plate 3 presses against a covering 8 of the passenger compartment without squashing it. The outer edge of the plate 3 has projections 9 for the snap-engagement of a cover 10 which has an aesthetic function and protects the heads 4a of the screws 4. A weatherstrip 12 of elastomeric material force-fitted on the structure 5 has a resiliently flexible edge 13 which projects towards the window 1.

The support plate 3 has an arcuate appendage 11 which extends towards the window 1 with its convex side facing the covering 8 so that its end is spaced therefrom. This end of the appendage 11 has two fork-like arms 11a with coaxial through-holes 16 on an axis transverse the appendage 11. A cylindrical body 14 has, at its ends, two cylindrical bodies 14a and 14b having axes perpendicular to the axis of the connecting rod, and hence parallel to each other, and having respective axial through-holes 17 and 18. The cylindrical body 14a, which is shorter axially than the body 14b, is connected pivotably to the fork 11a by the insertion of a resilient pin 15 through the coaxial holes 16 and 17. The end of the connecting rod 14 with the cylindrical body 14b is connected rotatably to a lever-like operating handle 20. The operating handle 20 has a peripheral edge which faces the structure 5 and defines a cavity 26 and which projects on both sides of the central portion of the handle to form two flanges 21 with transverse through-holes 22 which are coaxial with the hole 18 in the cylindrical body 14b of the connecting rod. A resilient pin 19 fitted through the holes 18, 22 connects the handle 20 pivotably to the connecting rod 14.

The end of the handle 20 which is near the window 1 is connected pivotably, by a fork-and-resilient-pin connection or the like, to a connecting member 23 which is fixed to the window 1, in known manner, with the interposition of elastomeric elements 24, 25. The end 20a of the handle 20 furthest from the connecting member 23 has a broader surface for manual operation. The longitudinal cavity 26 of the handle 20 contains integral front and rear ribbed projections 27 and 28 for coupling with the cylindrical body 14a and the fork 11a by resilient deformation. The cavity 26 has further front and rear ribbed projections 29 and 30 for defining abutment surfaces for the cylindrical body 14a and the fork 11a.

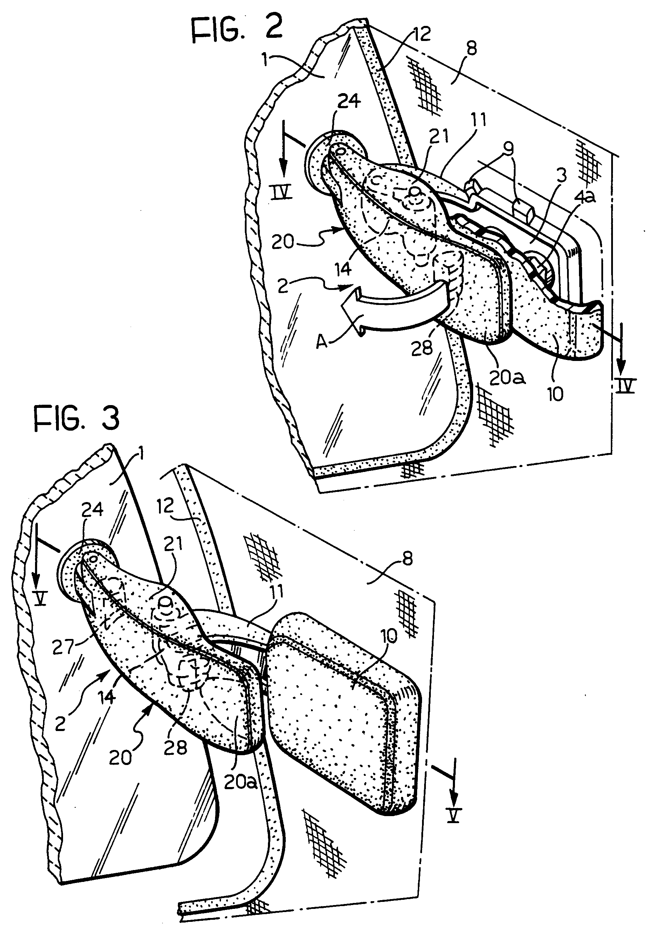

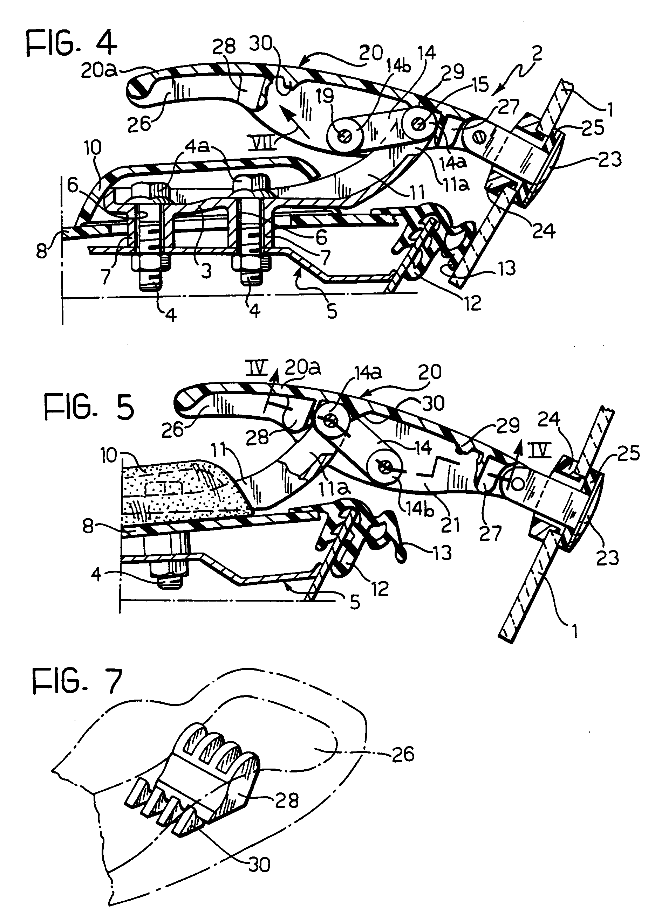

In use, the device 1 provides for two limit positions corresponding to the closed and open positions of the window 1. In the closed position (Figures 2 and 4), the forked end 11a, and consequently the cylindrical body 14a, are brought into abutment with the front projection 29 in the cavity 26 of the operating handle 20. In this condition, the front ribbed projection 27 urges the unit consisting of the cylindrical body and the fork resiliently against the abutment 29. If the end 20a of the handle 20 is moved manually in the sense indicated by the arrow A in Figure 2, a levering torque is exerted on the projection 27 which is resiliently deformed, releasing the device and thus opening the window 1 (Figure 3 and 5). In order that the cylindrical-body-and-fork unit 11a-14a can contact the projection 30, it is necessary to apply sufficient force to deform the rear ribbed projection 28 resiliently and the projection 28 then keeps the window 1 in the open position by bearing on the cylindrical-body-and-fork unit. The reverse operation returns the window 1 to the closed and locked position.

Preferably, the handle 20 and the projections 27, 28, 29, 30 are formed in one piece of plastics resin having suitable strength and resilience characteristics.

The present invention enables the production of a simple and efficient operating and locking device which provides predefined closed and open positions for a pivotable rear window of a motor vehicle and which locks the window effectively so as to prevent undesired movement from those positions. The device according to the invention also enables the user to feel the window lock to position by virtue of the change in the resistance encountered during the resilient deformation of the locking ribs and the snap caused thereby.

## Claims

1. A device for operating and locking a pivotable rear window of a motor vehicle, comprising:
- a connecting member (23) for fixing to the window (1),
- a lever-like operating handle (20), one end of which is articulated to the member (23) for connection to the window (1),
- a support member (11) which is intended to be fixed to the structure (5) of the vehicle and has a support appendage (11a), and
- a positioning and connecting rod (14) the two ends of which are articulated about respective parallel axes to the support appendage (11a) and to the operating handle (20), in a central position of said handle,
characterised in that the handle (20) has two seats for the selective snap-engagement of the end of the support appendage (11a) connected to the positioning and connecting rod (14) in the closed and open positions of the window (1), respectively.

2. An operating device according to Claim 1, characterised in that the seats are defined by resiliently-deformable ribbed projections (27, 28) on the surface of the handle (20) which faces the connecting rod (14).

3. An operating device according to Claim 1 or Claim 2, characterised in that the surface of the operating handle (20) which faces the connecting rod (14) has ribbed projections (29, 30) which act as abutments for the end of the support appendage (11a) connected to the positioning and connecting rod (14).

4. An operating device according to Claim 2 or Claim 3, characterised in that the ribbed projections (27, 28, 29, 30) are formed integrally with the handle (20) and are made of a plastics resin.

## Patentansprüche

1. Vorrichtung zum Betätigen und Feststellen eines schwenkbaren rückwärtigen Fensters eines Kraftfahrzeugs, umfassend:
- ein Verbindungselement (23) zum Befestigen an dem Fenster (1),
- einen hebelartigen Betätigungsgriff (20), von dem ein Ende an dem Element (23) zur Verbindung mit dem Fenster (1) angelenkt ist,
- ein Halteelement (11), das dazu vorgesehen ist, am Aufbau (5) des Fahrzeugs befestigt zu werden, und einen Halteansatz (11a) aufweist, und
- einen Positionierungs- und Verbindungsstab (14), dessen beide Enden an dem Halteansatz (11a) bzw. an dem Betätigungsgriff (20) - in einer mittleren Position des Griffs - um parallele Achsen angelenkt sind,
**dadurch gekennzeichnet,**
daß der Griff (20) zwei Sitze für den wahlweisen Schnappeingriff des mit dem Positionierungs- und Verbindungsstab (14) verbundenen Endes des Halteansatzes (11a) in der geschlossenen bzw. offenen Stellung des Fensters (1) aufweist.

2. Betätigungseinrichtung nach Anspruch 1,
dadurch gekennzeichnet, daß die Sitze durch elastisch deformierbare Rippenvorsprünge (27, 28) an der dem Verbindungsstab (14) zugewandten Fläche des Griffs (20) definiert sind.

3. Betätigungseinrichtung nach Anspruch 1 oder Anspruch 2,
dadurch gekennzeichnet, daß die dem Verbindungsstab (14) zugewandte Fläche des Betätigungsgriffs (20) Rippenvorsprünge (29, 30) aufweist, welche als Anschläge für das mit dem Positionierungs- und Verbindungsstab (14) verbundene Ende des Halteansatzes (11a) wirken.

4. Betätigungseinrichtung nach Anspruch 2 oder Anspruch 3,
dadurch gekennzeichnet, daß die Rippenvorsprünge (27, 28, 29, 30) integral mit dem Griff (20) ausgebildet und aus einem Kunstharz hergestellt sind.

## Revendications

1. Dispositif pour manoeuvrer et verrouiller une fenêtre arrière pivotante d'un véhicule automobile, comprenant :
- un élément de liaison (23) destiné à être fixé à la fenêtre (1),
- une poignée de manoeuvre (20) analogue à un levier, dont une extrémité est articulée sur l'élément (23) de liaison avec la fenêtre (1),
- un élément de support (11) gui est destiné à être fixé à la structure (5) du véhicule et qui possède un appendice de support (11a), et
- une tige de positionnement et de liaison formant bielle (14) dont les deux extrémités sont articulées, par des axes parallèles respectifs, à l'appendice de support (11a) et à la poignée de manoeuvre (20), en un point central de cette poignée,
caractérisé en ce que la poignée (20) présente deux logements respectivement destinés à encliqueter sélectivement l'extrémité de l'appendice de support (11a) qui est reliée à la tige de positionnement et de liaison forment bielle (14) dans les positions fermée et ouverte de la fenêtre (1).

2. Dispositif de manoeuvre selon la revendication 1, caractérisé en ce que les logements sont définis par des bossages nervurés élastiquement déformables (27 , 28) sur la surface de la poignée (20) qui est dirigée vers la bielle (14).

3. Dispositif de manoeuvre selon la revendication 1 ou la revendication 2, caractérisé en ce que la surface de la poignée de manoeuvre (20) qui est dirigée vers la bielle (14) possède des bossages nervurés (29, 30) qui se comportent comme des butées pour l'extrémité de l'appendice de support (11a) qui est reliée à la tige de positionnement et de liaison formant bielle (14).

4. Dispositif de manoeuvre selon la revendication 2 ou 3, caractérisé en ce que les bossages nervures (27, 28, 29, 30) sont formés en une seule pièce avec la poignée (20) et sont faits d'une résine synthétique.
